# EUROPÄISCHE PATENTSCHRIFT

(11) **EP 3 449 887 B1**
(45) Veröffentlichungstag und Bekanntmachung des Hinweises auf die Patenterteilung: **08.01.2020**
(21) Anmeldenummer: 18187956.0
(22) Anmeldetag: 08.08.2018
(51) Int. Cl.: A61G 13/10, A61G 7/08

(54) **FUSSTEIL FÜR EINEN EINE STÜTZSÄULE UND EINE PATIENTENLAGERFLÄCHE AUFWEISENDEN OPERATIONSTISCH**
FOOT SECTION FOR AN OPERATING TABLE HAVING A PATIENT LYING AREA AND A SUPPORTING COLUMN
PARTIE FORMANT PIED POUR UNE COLONNE DE SUPPORT ET UNE TABLE D'OPÉRATION COMPORTANT UNE SURFACE DESTINÉE À SUPPORTER UN PATIENT

(30) Priorität: 31.08.2017 DE 102017120001
(43) Veröffentlichungstag der Anmeldung: 06.03.2019
(73) Patentinhaber: Schmitz u. Söhne GmbH & Co. Kommanditgesellschaft, 58739 Wickede (DE)
(72) Erfinder: SCHMITZ, Ludolf, 58739 Wickede (DE)
(74) Vertreter: Meinke, Jochen

(56) Entgegenhaltungen:
- WO-A1-00/56259
- DE-A1-102010 051 126
- GB-A- 1 048 512
- GB-A- 2 393 646
- US-A- 3 054 623
- US-A- 4 225 125

## Beschreibung

Die Erfindung betrifft ein Fußteil für einen eine Stützsäule und eine Patientenlagerfläche aufweisenden Operationstisch mit einem zur Aufnahme der Stützsäule bestimmten, auf Lenkrollen ruhenden, plattenförmigen, mehrere Eckbereiche aufweisenden Trägerrahmen, der in seinen Eckbereichen jeweils ein mit ihm verbundenes Rollengehäuse aufweist, in dem jeweils eine Lenkrolle derart angeordnet ist, dass sie zwischen einer ersten Stellung, in der sie sich auf dem Boden abstützt und den Trägerrahmen mit den Rollengehäusen in einem Abstand von dem Boden hält, und einer zweiten Stellung höhenverstellbar ist, in der der Trägerrahmen auf dem Boden aufliegt, wobei die Lenkrolle an einem Rollenträger befestigt ist, der an dem Rollengehäuse um eine vertikale Achse drehbar gelagert ist, wobei in dem Rollengehäuse eine Stelleinrichtung zur Höhenverstellung des Rollenträgers angeordnet ist.

Derzeit werden verbreitet Operationstische verwendet, die auf einer flachen stationären Bodenplatte montiert sind. Diese Tische erfordern keine baulichen Vorkehrungen am Aufstellungsort und bieten durch die flache Grundplatte (ca. 10 bis 15 mm) eine gute Ergonomie und Röntgenzugänglichkeit. Hauptnachteile dieser Operationstische auf Bodenplatten sind der erhöhte Aufwand zum Ortswechsel, z.B. zu Reinigungszwecken, zur Optimierung der Raumnutzung im Operationssaal oder auch ggf. zum Transport des Patienten.

Darüber hinaus sind auch mobile Operationstische mit eigenem Fahrwerk bekannt, die jedoch aufgrund der beachtlichen Fahrwerksbauhöhe eine schlechtere Ergonomie und eine schlechtere Röntgenzugänglichkeit aufweisen.

Aus EP 1 530 958 B1 ist ein mobiles Fußteil für einen Operationstisch mit den Merkmalen des Oberbegriffes des Patentanspruches 1 bekannt. Dabei ist das Rollengehäuse zylindrisch mit einer vertikalen Zylinderachse ausgebildet und der Rollenträger umfasst eine kolbenartig in dem Rollengehäuse verschiebbare Platte, an der Lagerböcke für die Lenkrolle befestigt sind und die mittels eines Wälzkörperlagers in dem Rollengehäuse um die Zylinderachse drehbar gelagert ist. Die Lagerböcke sind an der dem Boden abgewandten Seite der Rollenplatte befestigt und die Lenkrolle ragt durch eine Öffnung in der Rollenplatte. Dieses Fußteil weist zwar eine relativ geringe Bauhöhe auf, der Aufbau ist aber sehr aufwendig. Außerdem ist das jeweilige ringförmige Rollengehäuse so aufgebaut, dass außerhalb der Rollenschwenkachse immer ein ausladender Gehäusebereich verbleibt, der die Bewegungsfreiheit des Operateurs beeinträchtigt.

Aus DE 10 2010 051 126 A1 ist ein Operationstisch mit einer fahrbaren Basis bekannt, die mit vier Laufrollen versehen ist, welche jeweils über einen an der Basis befestigten Schwenkhebel von einer Fahrposition in eine Standposition um eine horizontale Achse schwenkbar sind. Aus DE 10 2010 020 129 A1 ist eine mobile Operationsliege bekannt, die Laufrollen aufweist, welche verschwenkbar an einem Bodenständer angebracht sind.

Aufgabe der Erfindung ist, ein mobiles Fußteil für einen Operationstisch zu schaffen, welches ergonomisch günstig gestaltet und einen möglichst einfachen und kompakten Aufbau aufweist.

Diese Aufgabe wird erfindungsgemäß dadurch gelöst, dass das jeweilige Rollengehäuse ein an der Oberseite des Trägerrahmens befestigtes Gehäuseunterteil und ein Gehäuseoberteil mit einem über den Eckbereich hinausragenden Auslegerarm aufweist, in welchem der Rollenträger gelagert ist, wobei das Gehäuseoberteil von der Stelleinrichtung auf das Gehäuseunterteil absenkbar ist, wobei in abgesenkter Stellung des Gehäuseoberteils sich die Lenkrolle in der ersten Stellung befindet und der Trägerrahmen somit von den Lenkrollen getragen wird.

Ein erfindungsgemäßes Fußteil mit einem in der Regel rechteckförmigen, plattenförmigen Trägerrahmen weist somit vier baugleiche modulartige Rollengehäuse auf, die einfach in den Eckbereichen oberseitig am Trägerrahmen befestigt werden können. Dadurch ist auch eine Nachrüstung von Fußteilen ohne Rollen möglich. Der Aufbau der Rollengehäuse ist recht einfach und robust und die Rollengehäuse mit Lenkrollen weisen nur eine geringe Baugröße und Bauhöhe auf, so dass das Fußteil ergonomisch günstig gestaltet ist und ein mit einem solchen Fußteil ausgerüsteter Operationstisch eine gute Röntgenzugänglichkeit aufweist. Außerdem können die Lenkrollen in der zweiten Stellung nach innen unter den jeweiligen Auslegerarm geschwenkt werden, so dass das Fußteil in der zweiten, entlasteten (Operations-)Stellung kompakt ist.

Um während des Anhebens bzw. Schwenkens der Rollen undefinierte Zustände durch unsymmetrische Lasten auf dem Operationstisch zu vermeiden, ist besonders bevorzugt vorgesehen, dass die Stelleinrichtungen der an einem vorderen Ende des Trägerrahmens angeordneten Rollengehäuse unabhängig von den Stelleinrichtungen der an einem hinteren Ende des Trägerrahmens angeordneten Rollengehäuse betätigbar sind. Beim Anheben der Bodenplatte, also des Trägerrahmens stabilisiert die jeweils andere noch nicht angehobene Seite das Gesamtsystem während des Schwenkens um die Kippkante des Trägerrahmens oder der beiden schon in Bodenkontakt befindlichen Rollen.

Zum Absenken des Gehäuseoberteils gegenüber dem Gehäuseunterteil sieht die Erfindung bevorzugt zwei unterschiedliche Varianten vor:
Nach einer ersten Variante ist vorgesehen, dass das Gehäuseoberteil gegenüber dem Gehäuseunterteil in vertikaler Richtung geführt und von der Stelleinrichtung in vertikaler Richtung höhenverstellbar ist. Bei dieser Ausführungsform werden die Rollen geradlinig bzw. vertikal bewegt.

Nach einer zweiten Variante ist vorgesehen, dass das Gehäuseoberteil an dem dem Auslegerarm abgewandten Ende verschwenkbar am Gehäuseunterteil angelenkt und von der Stelleinrichtung verschwenkbar ist. Bei dieser Ausführungsform wird das Gehäuseoberteil bzw. dessen Auslegerarm durch die Stelleinrichtung sozusagen heruntergezogen, um die jeweilige Rolle nach unten auf die Bodenfläche zu schwenken.

Beide vorgenannten Varianten sind geeignet, die beim Verfahren von Operationstischen übliche Bodenfreiheit von etwa 20 mm zu gewährleisten.

Ferner ist in ganz besonders bevorzugter Ausgestaltung vorgesehen, dass das jeweilige Rollengehäuse lösbar am Trägerrahmen befestigt ist. So kann das jeweilige Rollengehäuse zum Beispiel angeschraubt werden. Dieser einfache modulartige Aufbau der Rollengehäuse ermöglicht es auf besonders einfache Weise, auch bestehende Operationstische mit plattenförmigem Trägerrahmen ohne Rollen nachträglich mit Lenkrollen auszurüsten.

In bevorzugter weiterer Ausgestaltung ist vorgesehen, dass die jeweilige Stelleinrichtung eine hydraulische Kolbenzylindereinheit aufweist. Da an Operationstischen ohnehin in der Regel Hydraulikaggregate zur Verfügung stehen, ist diese Ausgestaltung besonders zweckmäßig. Zum Absenken des Trägerrahmens auf den Boden müssen dann lediglich die Kolbenzylindereinheiten druckentlastet werden, ein Anheben der Rollen bzw. des Gehäuseoberteils ist nicht notwendig. Alternativ kann auch eine andere Stelleinrichtung, z.B. ein elektrischer Linearmotor verwendet werden.

Dabei ist vorteilhaft vorgesehen, dass Hydraulikleitungen für die jeweilige Kolbenzylindereinheit an dem dem Auslegerarm abgewandten Bereich des jeweiligen Rollengehäuses angeschlossen sind. Durch diese Anordnung wird die Integration der Hydraulikleitungen in das Hydrauliksystem des Operationstisches wesentlich erleichtert, die Hydraulikleitungen sind sozusagen innerhalb und nicht am Außenrand angeordnet.

Alternativ ist bevorzugt vorgesehen, dass die jeweilige Stelleinrichtung ein mechanisches Stellgetriebe aufweist.

Dabei ist bevorzugt vorgesehen, dass das mechanische Stellgetriebe eine im Gehäuseunterteil gelagerte Exzenterwelle aufweist, welche von einem Zugelement verschwenkbar ist, wobei auf der Exzenterwelle ein mit dem Gehäuseoberteil verbundenes Schwenkelement angeordnet ist. Durch Betätigung des Zugelementes wird die Exzenterwelle um z.B. 45° verschwenkt, wodurch entsprechend das Schwenkelement betätigt wird und das Gehäuseoberteil auf das Gehäuseunterteil absenkt.

Das Schwenkelement weist bevorzugt eine Achse mit zwei drehbar auf der Achse gelagerten Druckrollen auf, wobei eine erste Druckrolle in einer Öffnung einer ersten Seitenwand des Gehäuseoberteils und eine zweite Druckrolle in einer Öffnung einer zweiten Seitenwand des Gehäuseoberteils geführt ist. Die Druckrollen drücken dann bei Betätigung der Exzenterwelle das Gehäuseoberteil nach unten.

Die beiden Öffnungen im Gehäuseoberteil sind bevorzugt von außen jeweils mit einem Verschlussdeckel verschlossen. Die Druckrollen und deren Achse werden durch die Verschlussdeckel nicht nur verborgen, sondern auch fixiert. Zur Kopplung des Zugelementes mit der Exzenterwelle ist vorgesehen, dass die Exzenterwelle drehfest mit einem Betätigungshebel verbunden ist, der mit dem Zugelement verbunden ist.

Ferner ist bevorzugt vorgesehen, dass das Zugelement einen im Gehäuseunterteil geführten Betätigungsschieber aufweist, der mit dem Betätigungshebel verbunden ist.

Dabei ist der Betätigungsschieber bevorzugt mit einem nach innen aus dem Gehäuseunterteil herausragenden Zugmittel verbunden, so dass sich das Zugmittel innerhalb des Fußteiles erstreckt.

Schließlich ist vorgesehen, dass das Zugmittel ein Zugseil, eine Zugkette oder eine Zugstange ist. Das Zugmittel selbst kann z.B. hydraulisch betätigt werden. Dabei kann vorteilhafterweise nur ein einziger Hydraulikzylinder zur Betätigung aller vier Lenkrollen vorgesehen sein.

Die Erfindung ist nachstehend anhand der Zeichnungen beispielhaft näher erläutert. Diese zeigen in
- Fig. 1: eine perspektivische Darstellung eines Operationstisches mit Fußteil,
- Fig. 2: eine erste Variante eines Rollengehäuses mit Lenkrolle ohne Bodenkontakt,
- Fig. 3: einen Schnitt durch das Rollengehäuse gemäß Fig. 2,
- Fig. 4: das Rollengehäuse mit Lenkrolle mit Bodenkontakt,
- Fig. 5: einen Schnitt durch das Rollengehäuse gemäß Fig. 4,
- Fig. 6: eine Explosionsdarstellung des Rollengehäuses,
- Fig. 7: eine zweite Variante eines Rollengehäuses mit Lenkrolle ohne Bodenkontakt,
- Fig. 8: einen Schnitt durch das Rollengehäuse gemäß Fig. 7,
- Fig. 9: das Rollengehäuse nach Fig. 7 mit Lenkrolle mit Bodenkontakt,
- Fig. 10: einen Schnitt durch das Rollengehäuse gemäß Fig. 9,
- Fig. 11: eine Explosionsdarstellung des Rollengehäuses nach Fig. 7.
- Fig. 12: eine dritte Variante eines Rollengehäuses mit Lenkrolle ohne Bodenkontakt,
- Fig. 13: einen Schnitt durch das Rollengehäuse nach Fig. 12,
- Fig. 14: einen Schnitt durch das Rollengehäuse nach Fig. 12 mit Lenkrolle mit Bodenkontakt,
- Fig. 15: eine Seitenansicht des Rollengehäuses nach Fig. 14 und in
- Fig. 16: eine Explosionsdarstellung des Rollengehäuses nach Fig. 12.

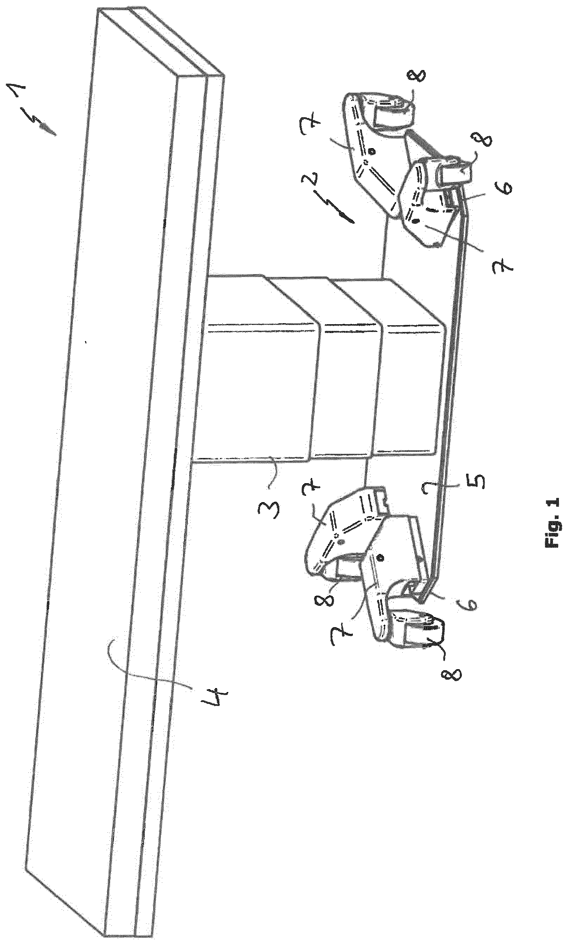

In Fig. 1 ist schematisch ein allgemein mit 1 bezeichneter Operationstisch dargestellt. Dieser Operationstisch 1 weist ein erfindungsgemäßes Fußteil 2 auf, auf dem eine vorzugsweise vertikal teleskopierbare Stützsäule 3 angeordnet ist, auf welcher oberseitig eine Patientenlagerfläche 4 befestigt ist.

Das Fußteil 2 weist einen plattenförmigen Trägerrahmen 5 auf, welcher im Wesentlichen rechteckförmig ausgebildet ist, wobei beim Ausführungsbeispiel die vier Eckbereiche 6 diagonal abgeschrägt sind. In jedem Eckbereich 6 ist jeweils am Trägerrahmen 5 oberseitig ein baugleiches Rollengehäuse 7 befestigt, welches jeweils in nachfolgend näher beschriebener Weise eine Lenkrolle 8 aufnimmt.

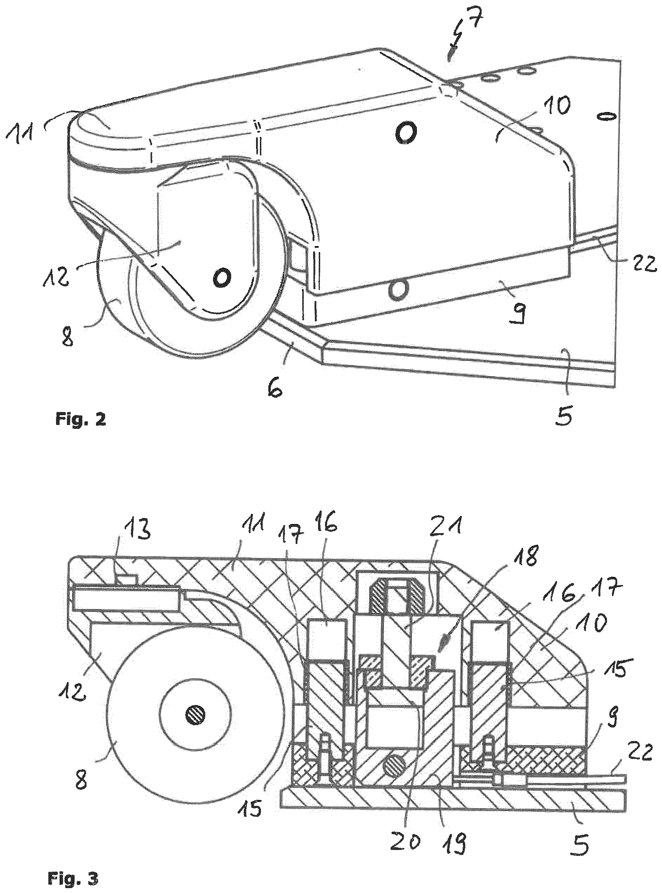

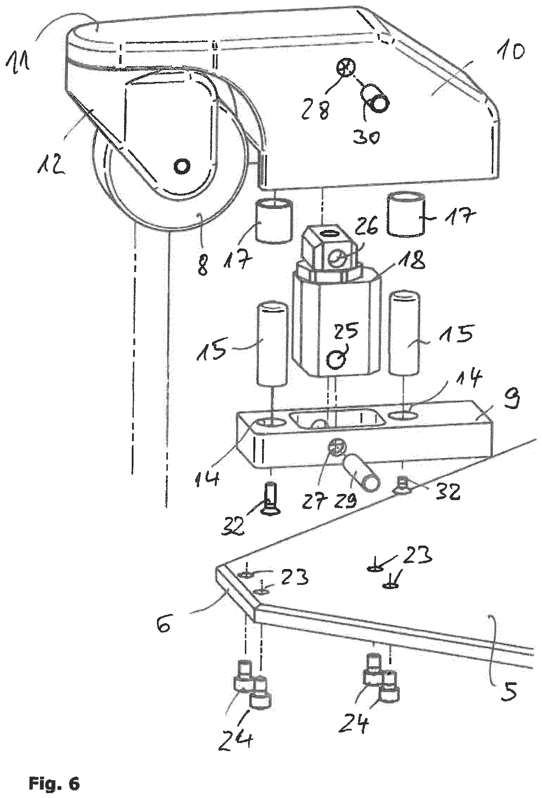

In den Figuren 2 bis 6 ist eine erste Variante des Fußteiles 2 dargestellt.

Das jeweilige Rollengehäuse 7 weist ein an der Oberseite des Trägerrahmens 5 befestigtes Gehäuseunterteil 9 und ein Gehäuseoberteil 10 auf, wobei das Gehäuseoberteil 10 einen über den Eckbereich 6 hinausragenden Auslegerarm 11 aufweist. An der Unterseite des Auslegerarmes 11 ist ein eine Lenkrolle 8 tragender Rollenträger 12 um eine vertikale Achse drehbar gelagert, wobei das Lager mit 13 angedeutet ist.

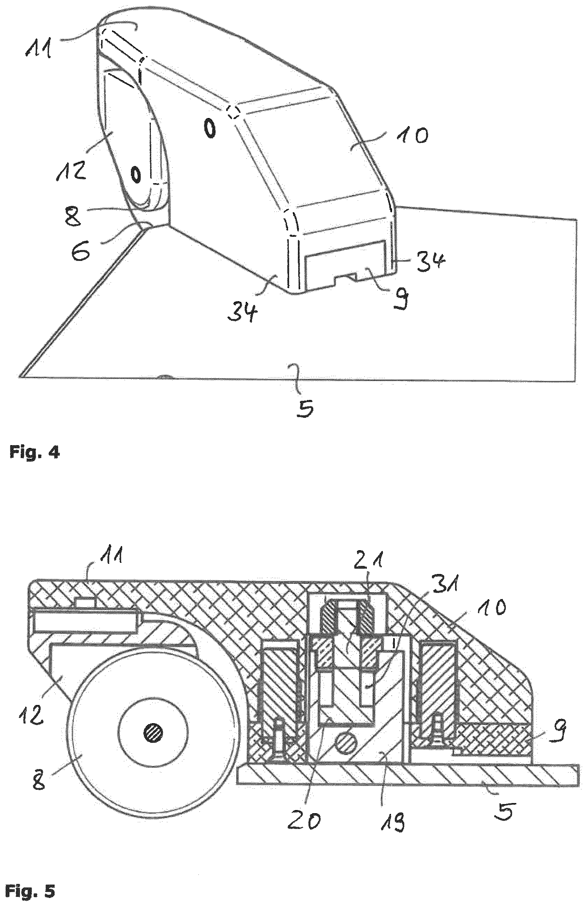

Die jeweilige Lenkrolle 8 ist in nachfolgend näher beschriebener Weise so ausgebildet, dass sie zwischen einer ersten Stellung, in der sie sich auf dem Boden abstützt (Figuren 4 und 5) und den Trägerrahmen 5 mit den Rollengehäusen 7 in einem Abstand von dem Boden hält, und einer zweiten Stellung (Figuren 2 und 3) höhenverstellbar ist, in der der Trägerrahmen 5 auf dem Boden aufliegt und die Lenkrollen 8 nicht wirksam sind. Dazu ist das Gehäuseoberteil 10 auf das Gehäuseunterteil 9 absenkbar, wobei in abgesenkter Stellung des Gehäuseoberteils 10 sich die Lenkrolle 8 in der ersten Stellung befindet, also in Kontakt mit dem Boden ist, und der Trägerrahmen 5 angehoben ist.

Das Gehäuseoberteil 10 ist bei der Variante nach den Figuren 2 bis 6 gegenüber dem Gehäuseunterteil 9 in vertikaler Richtung geführt. Dazu sind z.B. im Gehäuseunterteil 9 zwei voneinander beabstandete Bohrungen 14 vorgesehen, in welche Führungsbolzen 15 eingesteckt sind, welche mehr oder weniger weit in korrespondierende Bohrungen 16 im Gehäuseoberteil 10 eindringen können, in welche Lagerbuchsen 17 eingesetzt sind. Im Bereich zwischen den Führungsbolzen 15 ist zwischen dem Gehäuseunterteil 9 und dem Gehäuseoberteil 10 eine Kolbenzylindereinheit 18 aufgenommen, wobei das Zylindergehäuse 19 am Gehäuseunterteil 9 befestigt ist und ein im Zylindergehäuse 19 verschiebbarer Kolben 20 mit seiner Kolbenstange 21 mit dem Gehäuseoberteil 10 verbunden ist. Die Kolbenzylindereinheit 18 ist Bestandteil einer Stelleinrichtung zur Höhenverstellung des jeweiligen Rollenträgers 12. Die Kolbenzylindereinheit 18 ist über angedeutete Hydraulikleitungen 22, die vorzugsweise im dem Auslegerarm 11 abgewandten Bereich am jeweiligen Rollengehäuse 7 angeschlossen sind, mit einer Steuereinrichtung und Hydraulikaggregaten des Operationstisches 1 verbunden, was nicht näher dargestellt ist.

Das jeweilige Rollengehäuse 7 kann auf einfache Weise im jeweiligen Eckbereich 6 an der Oberseite des plattenförmigen Trägerrahmens 5 befestigt werden. Dazu sind vorzugsweise im jeweiligen Eckbereich 6 des Trägerrahmens 5 Befestigungsbohrungen 23 für Befestigungsschrauben 24 vorgesehen, die in mit Innengewinde versehene Bohrungen des Gehäuseunterteils 9 eingeschraubt werden können. Die Kolbenzylindereinheit 18 weist an beiden Enden jeweils eine Querbohrung 25, 26 und das Gehäuseunterteil 9 und das Gehäuseoberteil 10 weist jeweils ebenfalls eine Querbohrung 27, 28 auf, um durch Einstecken von Verbindungsstiften 29, 30 die Kolbenzylindereinheit 18 mit dem Gehäuseunterteil 9 und dem Gehäuseoberteil 10 zu verbinden. Die Führungsbolzen 15 können mittels Befestigungsschrauben 32 am Gehäuseunterteil 9 befestigt sein.

Um den jeweiligen Rollenträger 12 mit Lenkrolle 8 in die erste Stellung zu bringen (Figuren 4 und 5) und den Trägerrahmen 5 vom Boden anzuheben, wird der Kolbenringraum 31 der Kolbenzylindereinheit 18 mit Hydraulikflüssigkeit beaufschlagt, so dass die Kolbenzylindereinheit 18 das Gehäuseoberteil 10 nach unten auf das Gehäuseunterteil 9 zieht. Dadurch wird der Trägerrahmen 5 angehoben und das Fußteil 2 steht auf den Lenkrollen 8. Zum Absenken des Trägerrahmens 5 reicht es aus, die Kolbenzylindereinheit 18 drucklos zu schalten.

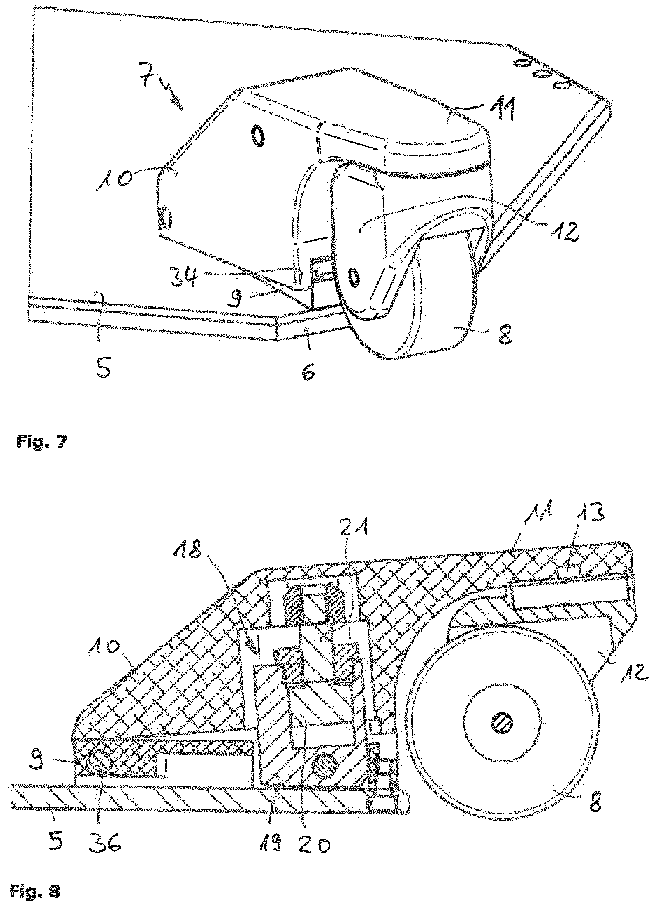

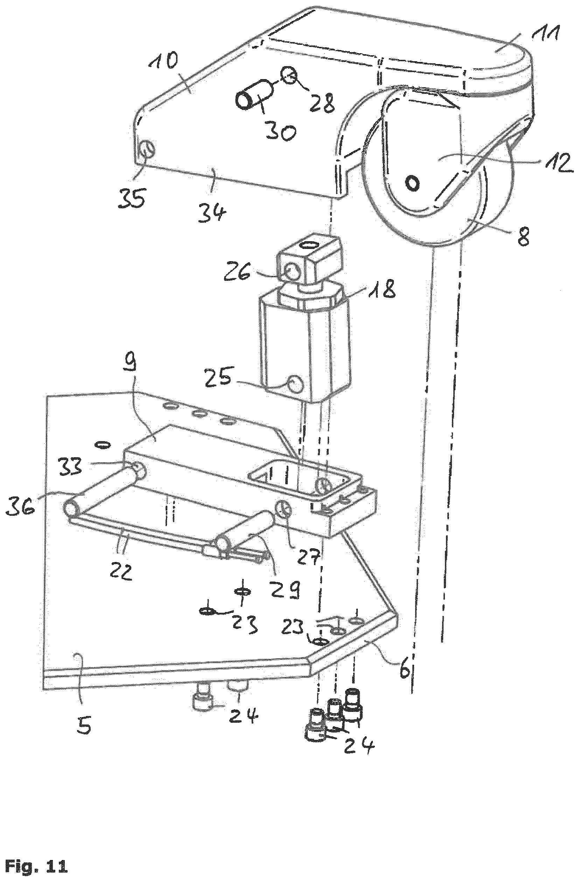

In den Figuren 7 bis 11 ist eine zweite Variante des Fußteiles 2 dargestellt, wobei dieselben Bezugszeichen für korrespondierende Teile verwandt sind.

Im Unterschied zur Variante 1 ist das Gehäuseoberteil 10 zur Höhenverstellbarkeit gegenüber dem Gehäuseunterteil 9 nicht in vertikaler Richtung geführt, sondern an dem dem Auslegerarm 11 abgewandten Ende verschwenkbar am Gehäuseunterteil 9 angelenkt. Dazu ist im Gehäuseunterteil 9 eine Querbohrung 33 vorgesehen und das Gehäuseoberteil 10 weist in seinem unteren Bereich zwei Seitenlaschen 34 auf, deren Abstand zueinander größer ist als die Breite des Gehäuseunterteils 9. In den beiden Seitenlaschen 34 ist jeweils ebenfalls eine Querbohrung 35 vorgesehen. Die beiden Seitenlaschen 34 des Gehäuseoberteils 10 umgreifen die Seitenränder des Gehäuseunterteils 9 und in die Querbohrungen 33 und 35 ist ein Schwenkzapfen 36 eingesetzt. Die Kolbenzylindereinheit 18 ist über die Verbindungsstifte 29 und 30 verschwenkbar am Gehäuseunterteil 9 und am Gehäuseoberteil 10 angelenkt.

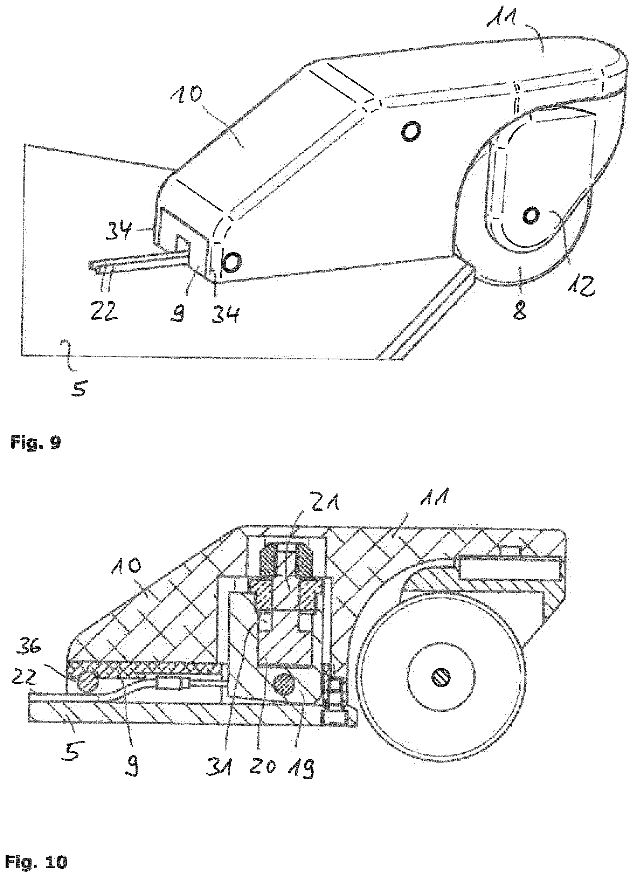

Um den jeweiligen Rollenträger 12 mit Lenkrolle 8 in die erste Stellung zu bringen (Figuren 9 und 10) und den Trägerrahmen 5 vom Boden anzuheben, wird der Kolbenringraum 31 der Kolbenzylindereinheit 18 mit Hydraulikflüssigkeit beaufschlagt, so dass die Kolbenzylindereinheit 18 das Gehäuseoberteil 10 nach unten auf das Gehäuseunterteil zieht bzw. verschwenkt. Dadurch wird der Trägerrahmen 5 angehoben und das Fußteil 2 steht auf den Lenkrollen 8. Zum Absenken des Trägerrahmens 5 reicht es aus, die Kolbenzylindereinheit 18 drucklos zu schalten.

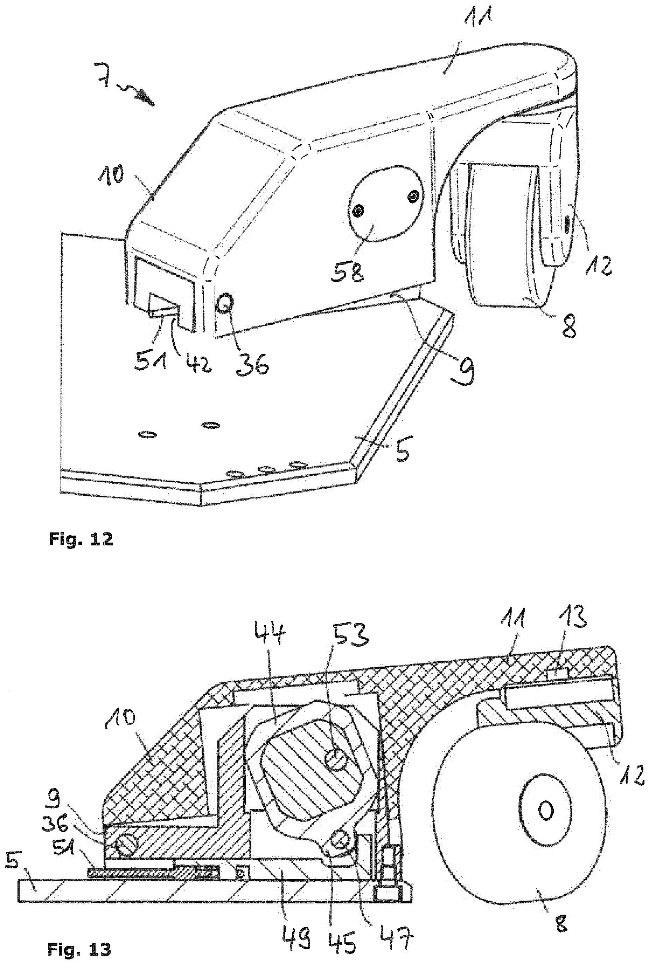

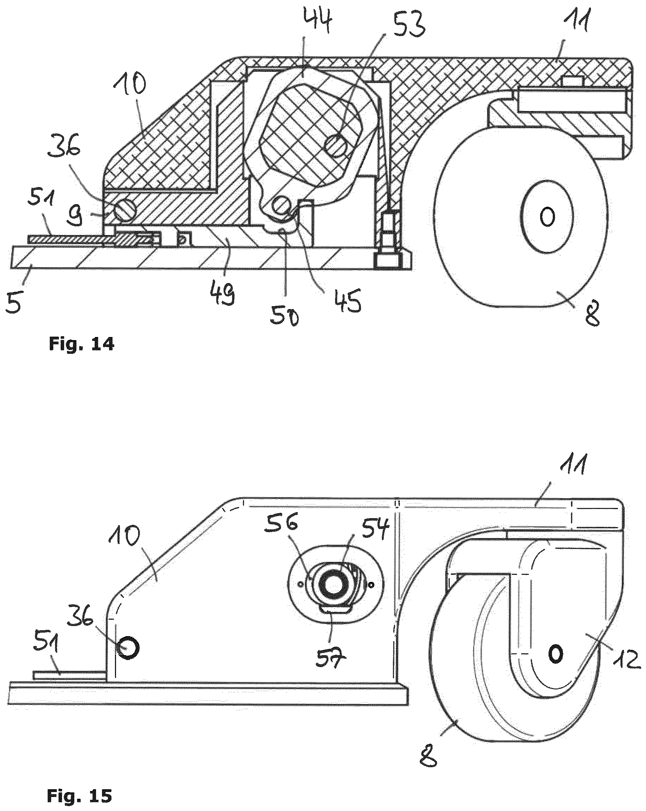

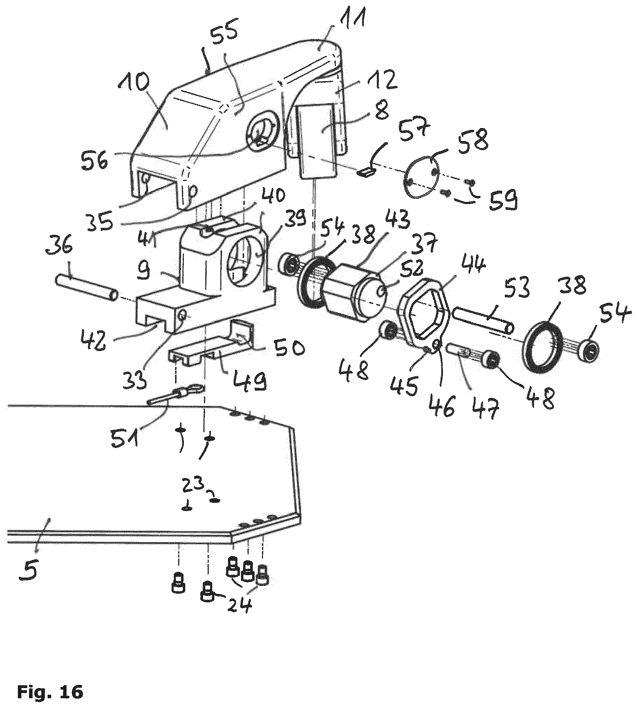

In den Figuren 12 bis 16 ist eine dritte Variante des Fußteiles 2 dargestellt, wobei dieselben Bezugszeichen für korrespondierende Teile verwandt sind.

Wie bei der Variante 2 ist das Gehäuseoberteil 10 zur Höhenverstellbarkeit gegenüber dem Gehäuseunterteil 9 nicht in vertikaler Richtung geführt, sondern an dem dem Auslegerarm 11 abgewandten Ende verschwenkbar am Gehäuseunterteil 9 angelenkt. Im Unterschied zur Variante 2 ist die Stelleinrichtung jedoch nicht hydraulisch, sondern es ist ein mechanisches Stellgetriebe vorgesehen.

Das Stellgetriebe weist eine im Gehäuseunterteil 9 gelagerte Exzenterwelle 37 auf. Die Exzenterwelle 37 weist an beiden Enden zylindrische Bereiche auf, auf denen jeweils ein Wälzlager 38 angeordnet ist, dessen Außenring jeweils in einer Aufnahme 39 aufgenommen ist, welche jeweils in einer Seitenwand 40 des Gehäuseunterteils 9 ausgespart ist. Die beiden Seitenwände 40 des Gehäuseunterteils 9 schließen zwischen sich einen Hohlraum 41 ein, der sich bis in eine Führungsaussparung 42 erstreckt, die an der Unterseite des Gehäuseunterteils 9 ausgespart ist. Der Hohlraum 41 dient zur Aufnahme eines mittleren unrunden Bereiches 43 der Exzenterwelle 37. Auf diesen Bereich 43 ist ein komplementär gestaltetes rahmenförmiges Element 44 drehfest aufgesteckt, welches an einer Seite einen Betätigungshebel 45 aufweist. In diesem Betätigungshebel ist eine Querbohrung 46 ausgespart, in welche eine Achse 47 eingesetzt ist, auf welcher beidseitig jeweils eine Betätigungsrolle 48 drehbar gelagert ist.

In der Führungsaussparung 42 ist ein Betätigungsschieber 49 aufgenommen, welcher einen Ansatz 50 aufweist, auf dem die Betätigungsrollen 48 abrollen können. Dieser weist mittig eine Ausnehmung auf, um den nötigen Freiraum für das Element 44 zu gewähren. Am anderen Ende ist der Betätigungsschieber 49 mit einem nach innen aus dem Gehäuseunterteil 9 herausragenden Zugmittel 51, z.B. einem Zugseil, verbunden. Wenn an dem Zugmittel 51 gezogen wird, verschiebt sich der Betätigungsschieber 49 innerhalb der Führungsaussparung 42. Dadurch werden die Betätigungsrollen 48 und darüber die Achse 47 sowie der Exzenterhebel 45 und damit die Exzenterwelle 37 um ein gewisses Maß verschwenkt, wodurch in nachfolgend näher beschriebener Weise das Gehäuseoberteil 10 um den Schwenkzapfen 36 auf das Gehäuseunterteil 9 verschwenkt wird.

Die Exzenterwelle 37 weist eine exzentrisch zur Symmetrieachse angeordnete durchgehende Bohrung 52 auf, in welche eine Achse 53 eingesteckt ist, auf deren beiden aus der Bohrung 52 herausragenden Enden jeweils eine Druckrolle 54 drehbar gelagert ist. Die Achse 53 mit den beiden Druckrollen 54 bilden ein Schwenkelement für das Gehäuseoberteil 10. Im Gehäuseoberteil 10 ist in jeder Seitenwand 55 jeweils eine Öffnung 56 ausgespart, wobei beide Öffnungen 56 miteinander fluchten. Jeweils eine Druckrolle 54 ist in einer zugeordneten Öffnung 56 geführt, wobei unterseitig in die jeweilige Öffnung 56 eine Laufbahn 57 eingesetzt sein kann. Die beiden Öffnungen 56 im Gehäuseoberteil 10 sind bevorzugt von außen jeweils mit einem Verschlussdeckel 58 verschlossen. Die Druckrollen 54 und deren Achse 53 werden durch die Verschlussdeckel 58 nicht nur verborgen, sondern auch fixiert. Die Verschlussdeckel 58 sind mit Schrauben 59 am Gehäuseoberteil 10 befestigt.

Wenn das Zugmittel 51 betätigt wird, also an diesem gezogen wird, wird in vorbeschriebener Weise die Exzenterwelle 37 um ein gewisses Maß verschwenkt. Dadurch wird die Achse 53 mit den beiden Druckrollen 54 nach unten bewegt und gleichzeitig das Gehäuseoberteil 10 auf das Gehäuseunterteil 9 um den Schwenkzapfen 36 nach unten verschwenkt. Dadurch wird der Trägerrahmen 5 angehoben und das Fußteil 2 steht auf den Lenkrollen 8. Zum Absenken des Trägerrahmens 5 muss das Zugmittel 51 wieder freigegeben werden. Das Zugmittel 51 kann gegebenenfalls manuell aber vorzugsweise durch eine Hydraulikeinrichtung betätigt werden.

Natürlich ist die Erfindung nicht auf die dargestellten Ausführungsbeispiele beschränkt. Weitere Ausgestaltungen sind möglich, ohne den Grundgedanken zu verlassen. Anstelle jeweils einer einzelnen Lenkrolle 8 können auch zwei benachbarte, schmalere Rollen verwendet werden, um den Rollwiderstand zu verringern.

**Bezugszeichenliste:**

| | | | |
|---|---|---|---|
| 1 | Operationstisch | 31 | Kolbenringraum |
| 2 | Fußteil | 32 | Befestigungsschrauben |
| 3 | Stützsäule | 33 | Querbohrung |
| 4 | Patientenlagerfläche | 34 | Seitenlaschen |
| 5 | Trägerrahmen | 35 | Querbohrung |
| 6 | Eckbereich | 36 | Schwenkzapfen |
| 7 | Rollengehäuse | 37 | Exzenterwelle |
| 8 | Lenkrolle | 38 | Wälzlager |
| 9 | Gehäuseunterteil | 39 | Aufnahme |
| 10 | Gehäuseoberteil | 40 | Seitenwand |
| 11 | Auslegerarm | 41 | Hohlraum |
| 12 | Rollenträger | 42 | Führungsaussparung |
| 13 | Lager | 43 | Bereich |
| 14 | Bohrungen | 44 | Rahmenförmiges Element |
| 15 | Führungsbolzen | 45 | Betätigungshebel |
| 16 | Bohrungen | 46 | Querbohrung |
| 17 | Lagerbuchsen | 47 | Achse |
| 18 | Kolbenzylindereinheit | 48 | Betätigungsrolle |
| 19 | Zylinder | 49 | Betätigungsschieber |
| 20 | Kolben | 50 | Ansatz |
| 21 | Kolbenstange | 51 | Zugmittel |
| 22 | Hydraulikleitungen | 52 | Bohrung |
| 23 | Befestigungsbohrung | 53 | Achse |
| 24 | Befestigungsschrauben | 54 | Druckrolle |
| 25 | Querbohrung | 55 | Seitenwand |
| 26 | Querbohrung | 56 | Öffnung |
| 27 | Querbohrung | 57 | Laufbahn |
| 28 | Querbohrung | 58 | Verschlussdeckel |
| 29 | Verbindungsstift | 59 | Schrauben |
| 30 | Verbindungsstift | | |

## Patentansprüche

1. Fußteil für einen eine Stützsäule (3) und eine Patientenlagerfläche (4) aufweisenden Operationstisch (1) mit einem zur Aufnahme der Stützsäule (3) bestimmten, auf Lenkrollen (8) ruhenden, plattenförmigen, mehrere Eckbereiche (6) aufweisenden Trägerrahmen (5), der in seinen Eckbereichen (6) jeweils ein mit ihm verbundenes Rollengehäuse (7) aufweist, in dem jeweils eine Lenkrolle (8) derart angeordnet ist, dass sie zwischen einer ersten Stellung, in der sie sich auf dem Boden abstützt und den Trägerrahmen (5) mit den Rollengehäusen (7) in einem Abstand von dem Boden hält, und einer zweiten Stellung höhenverstellbar ist, in der der Trägerrahmen (5) auf dem Boden aufliegt, wobei die jeweilige Lenkrolle (8) an einem Rollenträger (12) befestigt ist, der an dem Rollengehäuse (7) um eine vertikale Achse drehbar gelagert ist, wobei in dem Rollengehäuse (7) eine Stelleinrichtung zur Höhenverstellung des Rollenträgers (12) angeordnet ist, **dadurch gekennzeichnet,**
**dass** das jeweilige Rollengehäuse (7) ein an der Oberseite des Trägerrahmens (5) befestigtes Gehäuseunterteil (9) und ein Gehäuseoberteil (10) mit einem über den Eckbereich (6) hinausragenden Auslegerarm (11) aufweist, in welchem der Rollenträger (12) gelagert ist, wobei das Gehäuseoberteil (10) von der Stelleinrichtung auf das Gehäuseunterteil (9) absenkbar ist, wobei in abgesenkter Stellung des Gehäuseoberteils (10) sich die Lenkrolle (8) in der ersten Stellung befindet.

2. Fußteil nach Anspruch 1,
**dadurch gekennzeichnet,**
**dass** die Stelleinrichtungen der an einem vorderen Ende des Trägerrahmens (5) angeordneten Rollengehäuse (7) unabhängig von den Stelleinrichtungen der an einem hinteren Ende des Trägerrahmens (5) angeordneten Rollengehäuse (7) betätigbar sind.

3. Fußteil nach Anspruch 1 oder 2,
**dadurch gekennzeichnet,**
**dass** das Gehäuseoberteil (10) gegenüber dem Gehäuseunterteil (9) in vertikaler Richtung geführt und von der Stelleinrichtung in vertikaler Richtung höhenverstellbar ist.

4. Fußteil nach Anspruch 1 oder 2,
**dadurch gekennzeichnet,**
**dass** das Gehäuseoberteil (10) an dem dem Auslegerarm (11) abgewandten Ende verschwenkbar am Gehäuseunterteil (9) angelenkt und von der Stelleinrichtung verschwenkbar ist.

5. Fußteil nach einem der Ansprüche 1 bis 4,
**dadurch gekennzeichnet,**
**dass** das jeweilige Rollengehäuse (7) lösbar am Trägerrahmen (5) befestigt ist.

6. Fußteil nach einem der Ansprüche 1 bis 5,
**dadurch gekennzeichnet,**
**dass** die jeweilige Stelleinrichtung eine hydraulische Kolbenzylindereinheit (18) aufweist.

7. Fußteil nach Anspruch 6,
**dadurch gekennzeichnet,**
**dass** Hydraulikleitungen (22) für die jeweilige Kolbenzylindereinheit (18) an dem dem Auslegerarm (11) abgewandten Bereich des jeweiligen Rollengehäuses (7) angeschlossen sind.

8. Fußteil nach einem der Ansprüche 1 bis 5,
**dadurch gekennzeichnet,**
**dass** die jeweilige Stelleinrichtung ein mechanisches Stellgetriebe aufweist.

9. Fußteil nach Anspruch 8,
**dadurch gekennzeichnet,**
**dass** das mechanische Stellgetriebe eine im Gehäuseunterteil (9) gelagerte Exzenterwelle (37) aufweist, welche von einem Zugelement verschwenkbar ist, wobei auf der Exzenterwelle (37) ein mit dem Gehäuseoberteil (10) verbundenes Schwenkelement angeordnet ist.

10. Fußteil nach Anspruch 9,
**dadurch gekennzeichnet,**
**dass** das Schwenkelement eine Achse (53) mit zwei drehbar auf der Achse (53) gelagerten Druckrollen (54) aufweist, wobei eine erste Druckrolle (54) in einer Öffnung (56) einer ersten Seitenwand (55) des Gehäuseoberteils (10) und eine zweite Druckrolle (54) in einer Öffnung (56) einer zweiten Seitenwand (55) des Gehäuseoberteils (10) geführt ist.

11. Fußteil nach Anspruch 10,
**dadurch gekennzeichnet,**
**dass** die beiden Öffnungen (56) im Gehäuseoberteil (10) von außen jeweils mit einem Verschlussdeckel (58) verschlossen sind.

12. Fußteil nach Anspruch 9, 10 oder 11,
**dadurch gekennzeichnet,**
**dass** die Exzenterwelle (37) drehfest mit einem Betätigungshebel (45) verbunden ist, der mit dem Zugelement verbunden ist.

13. Fußteil nach Anspruch 12,
**dadurch gekennzeichnet,**
**dass** das Zugelement einen im Gehäuseunterteil (9) geführten Betätigungsschieber (49) aufweist, der mit dem Betätigungshebel (45) verbunden ist.

14. Fußteil nach Anspruch 13,
**dadurch gekennzeichnet,**
**dass** der Betätigungsschieber (49) mit einem nach innen aus dem Gehäuseunterteil (9) herausragenden Zugmittel (51) verbunden ist.

15. Fußteil nach Anspruch 14,
**dadurch gekennzeichnet,**
**dass** das Zugmittel (51) ein Zugseil, eine Zugkette oder eine Zugstange ist.

## Claims

1. Foot section for an operating table (1) having a support column (3) and a patient laying area (4) with a support frame (5) designed to mount the support column (3) which support frame rests on castors (8), is plate-like and has several corners areas (6), which support frame has respectively a roller housing (7) connected thereto in its corner areas (6), in which roller housing a castor (8) is arranged respectively, such that it is adjustable in height between a first position, in which it is supported on the floor and holds the support frame (5) with the roller housings (7) at a distance from the floor, and a second position in which the support frame (5) rests on the floor, wherein the respective castor (8) is secured to a roller support (12) which is mounted on the roller housing (7) to be rotatable about a vertical axis, wherein a setting device is arranged in the roller housing (7) for adjusting the height of the roller support (12),
**characterised in that**
the respective roller housing (7) has a lower housing part (9) secured onto the upper side of the support frame (5) and an upper housing part (10) with an extension arm (11) projecting out over the corner area (6), in which the roller support (12) is mounted, wherein the upper housing part (10) can be lowered by the setting device onto the lower housing part (9), wherein in the lowered position of the upper housing part (10) the castor (8) is located in the first position.

2. Foot section according to claim 1,
**characterised in that**
the setting devices of the roller housings (7) arranged at a front end of the support frame (5) can be activated independently of the setting devices of the roller housings (7) arranged at a rear end of the support frame (5).

3. Foot section according to claim 1 or 2,
**characterised in that**
the upper housing part (10) is guided in vertical direction relative to the lower housing part (9) and can be adjusted in height by the setting device in vertical direction.

4. Foot section according to claim 1 or 2,
**characterised in that**,
the upper housing part (10) is hinged pivotably onto the lower housing part (9) at the end facing away from the extension arm (11) and is pivotable by the setting device.

5. Foot section according to any of claims 1 to 4,
**characterised in that**,
the respective roller housing (7) is secured detachably to the support frame (5).

6. Foot section according to any of claims 1 to 5,
**characterised in that**,
the respective setting device has a hydraulic piston cylinder unit (18).

7. Foot section according to claim 6,
**characterised in that**,
hydraulic lines (22) for the respective piston cylinder unit (18) are connected to the region of the respective roller housing (7) facing away from the extension arm (11).

8. Foot section according to any of claims 1 to 5,
**characterised in that**
the respective setting device has a mechanical actuator.

9. Foot section according to claim 8,
**characterised in that**
the mechanical actuator has an eccentric shaft (37) mounted in the lower housing part (9), which eccentric shaft can be pivoted by a tension element, wherein a pivot element connected to the upper housing part (10) is arranged on the eccentric shaft (37).

10. Foot section according to claim 9,
**characterised in that**,
the pivot element has an axis (53) with two pressing rollers (54) mounted rotatably on the axis (53), wherein a first pressing roller (54) is guided in an opening (56) of a first side wall (55) of the upper housing part (10) and a second pressing roller (54) is guided in an opening (56) of a second side wall (55) of the upper housing part (10).

11. Foot section according to claim 10,
**characterised in that**
the two openings (56) in the upper housing part (10) are closed from the outside respectively by a cover (58).

12. Foot section according to claim 9, 10 or 11,
**characterised in that**
the eccentric shaft (37) is connected in a non-rotational manner to an operating lever (45) which is connected to the tension element.

13. Foot section according to claim 12,
**characterised in that**
the tension element has an operating slide (49) guided in the lower housing part (9), which operating slide is connected to the operating lever (45).

14. Foot section according to claim 13,
**characterised in that**
the operating slide (49) is connected to a tension element (51) projecting inwardly out of the lower housing part (9).

15. Foot section according to claim 14,
**characterised in that**
the tension element (51) is a tension cable, a tension chain or a tension rod.

## Revendications

1. Partie formant pied pour une table d'opération (1) présentant une colonne de support (3) et une surface destinée à porter un patient (4) avec un châssis porteur (5) conçu pour la réception de la colonne de support (3), reposant sur des roulettes pivotantes (8), en forme de plateau, présentant plusieurs zones d'angle (6), qui présente dans ses zones d'angle (6) respectivement un logement de roulette (7) relié à celui-ci, dans lequel respectivement une roulette pivotante (8) est disposée de telle sorte qu'elle puisse être réglée en hauteur entre une première position dans laquelle elle s'appuie sur le sol et maintient le châssis porteur (5) avec les logements de roulette (7) à une distance du sol, et une seconde position dans laquelle le châssis porteur (5) repose sur le sol, dans laquelle la roulette pivotante respective (8) est fixée à un support de roulette (12) qui est monté au logement de roulette (7) de façon à pouvoir tourner autour d'un axe vertical, dans laquelle un dispositif de réglage pour le réglage en hauteur du support de roulette (12) est disposé dans le logement de roulette (7),
**caractérisée en ce que**,
le logement de roulette respectif (7) présente une partie inférieure de logement (9) fixée au côté supérieur du châssis porteur (5) et une partie supérieure de logement (10) avec un bras de prolongement (11) dépassant au-dessus de la zone d'angle (6), dans lequel le support de roulette (12) est monté, dans laquelle la partie supérieure de logement (10) peut être abaissée par le dispositif de réglage sur la partie inférieure de logement (9), dans laquelle, en position abaissée de la partie supérieure de logement (10), la roulette pivotante (8) se trouve dans la première position.

2. Partie formant pied selon la revendication 1,
**caractérisée en ce que**,
les dispositifs de réglage des logements de roulette (7) disposés au niveau d'une extrémité avant du châssis porteur (5) peuvent être actionnés indépendamment des dispositifs de réglage des logements de roulette (7) disposés au niveau d'une extrémité arrière du châssis porteur (5).

3. Partie formant pied selon la revendication 1 ou 2,
**caractérisée en ce que**
la partie supérieure de logement (10) est conduite en direction verticale par rapport à la partie inférieure de logement (9) et peut être réglée en hauteur en direction verticale par le dispositif de réglage.

4. Partie formant pied selon la revendication 1 ou 2,
**caractérisée en ce que**
la partie supérieure de logement (10) au niveau de l'extrémité détournée du bras de prolongement (11) est articulée de façon à pouvoir pivoter au niveau de la partie inférieure de logement (9) et que le dispositif de réglage peut faire pivoter.

5. Partie formant pied selon l'une quelconque des revendications 1 à 4,
**caractérisée en ce que**
le logement de roulette respectif (7) est fixé de façon amovible au châssis porteur (5).

6. Partie formant pied selon l'une quelconque des revendications 1 à 5,
**caractérisée en ce que**
le dispositif de réglage respectif présente une unité de cylindre-piston hydraulique (18).

7. Partie formant pied selon la revendication 6,
**caractérisée en ce que**
les conduites hydrauliques (22) pour l'unité de cylindre-piston respective (18) sont raccordées à la zone du logement de roulette (7) respective détournée du bras de prolongement (11).

8. Partie formant pied selon l'une quelconque des revendications 1 à 5,
**caractérisée en ce que**
le dispositif de réglage respectif présente une transmission de réglage mécanique.

9. Partie formant pied selon la revendication 8,
**caractérisée en ce que**
la transmission de réglage mécanique présente un arbre d'excentrique (37) monté dans la partie inférieure de logement (9) qu'un élément de traction peut faire pivoter, dans laquelle est disposé sur l'arbre d'excentrique (37) un élément basculant lié à la partie supérieure de logement (10).

10. Partie formant pied selon la revendication 9,
**caractérisée en ce que**
l'élément basculant présente un axe (53) avec deux rouleaux presseurs (54) montés de façon à pouvoir tourner autour de l'axe (53), dans laquelle un premier rouleau presseur (54) est conduit dans une ouverture (56) d'une première paroi latérale (55) de la partie supérieure de logement (10) et un second rouleau presseur (54) est conduit dans une ouverture (56) d'une seconde paroi latérale (55) de la partie supérieure de logement (10).

11. Partie formant pied selon la revendication 10,
**caractérisée en ce que**
les deux ouvertures (56) dans la partie supérieure de logement (10) sont fermées de l'extérieur respectivement avec un couvercle de fermeture (58).

12. Partie formant pied selon la revendication 9, 10 ou 11,
**caractérisée en ce que**
l'arbre d'excentrique (37) est relié fixement à un levier d'actionnement (45) qui est relié à l'élément de traction.

13. Partie formant pied selon la revendication 12,
**caractérisée en ce que**
l'élément de traction présente un coulisseau d'actionnement (49) conduit dans la partie inférieure de logement (9) qui est relié au levier d'actionnement (45).

14. Partie formant pied selon la revendication 13,
**caractérisée en ce que**
le coulisseau d'actionnement (49) est relié à un moyen de traction (51) dépassant de la partie inférieure de logement (9).

15. Partie formant pied selon la revendication 14,
**caractérisée en ce que**
le moyen de traction (51) est un câble de traction, une chaîne de traction ou une barre de traction.
